(19) Europäisches Patentamt / European Patent Office / Office européen des brevets

(11) **EP 1 929 616 B1**

(12) **EUROPÄISCHE PATENTSCHRIFT**

(45) Veröffentlichungstag und Bekanntmachung des Hinweises auf die Patenterteilung:
**29.10.2014 Patentblatt 2014/44**

(21) Anmeldenummer: **06793396.0**

(22) Anmeldetag: **11.09.2006**

(51) Int Cl.:
*H02M 7/02* (2006.01)     *H02M 7/42* (2006.01)

(86) Internationale Anmeldenummer:
**PCT/EP2006/066214**

(87) Internationale Veröffentlichungsnummer:
**WO 2007/039410 (12.04.2007 Gazette 2007/15)**

(54) **ERREGEREINRICHTUNG FÜR EINE ELEKTRISCHE MASCHINE**

EXCITATION DEVICE FOR AN ELECTRIC MACHINE

SYSTEME D'EXCITATION POUR MACHINE ELECTRIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.09.2005 DE 102005047551**

(43) Veröffentlichungstag der Anmeldung:
**11.06.2008 Patentblatt 2008/24**

(73) Patentinhaber: **Siemens Aktiengesellschaft
80333 München (DE)**

(72) Erfinder: **WEIGEL, Jan
91077 Großenbuch (DE)**

(56) Entgegenhaltungen:
**EP-B1- 1 247 324     DE-A1- 4 133 001
US-B1- 6 362 588**

**Beschreibung**

Die Erfindung bezieht sich auf eine Erregereinrichtung für eine elektrische Maschine gemäß dem Oberbegriff des Patentanspruches 1. Insbesondere ist die elektrische Maschine eine Synchronmaschine, die als Polradwicklung vorzugsweise, aber nicht ausschließlich, eine supraleitende Induktivität verwendet.

In elektrischen Maschinen mit elektrisch erregtem und bewegtem Sekundärteil (Rotor), wie insbesondere bei Synchronmaschinen(SM), können die Erregerverluste durch Ausführung der Erregerwicklung als hochtemperatursupraleitende (HTS = High Temperature Superconductor) Wicklung vorteilhafterweise auf ein Minimum reduziert werden. Dazu ist aber die Kühlung der Supraleiter auf einen Temperaturbereich von unterhalb 80K, d.h. wenigstens der Flüssig-Stickstoff-Temperatur, notwendig.

Bei einem Aufbau mit Supraleitern ist jeder Wärmeeintrag über mechanische Kontakte möglichst zu vermeiden. Mechanische Kontakte, wie Schleifringe od. dgl., sind aufgrund erforderlicher Wartung aufwendig und überdies verschleißanfällig. Aus diesem Grund wird die Erregerleistung, die Überwachungs- und Regelinformation vorteilhafterweise berührungslos, d.h. induktiv auf den Rotor übertragen. Beim Betrieb der Maschine wird gefordert, die Entregungsenergie beim Abmagnetisieren der Feldwicklungen in der Maschine in Wärme umzusetzen.

Bekannte Erregereinrichtungen für eine supraleitende Wicklung bestehen vorzugsweise aus einer berührungslosen Energieübertragungsstrecke, einer berührungslosen Steuer- oder Regelsignalübertragungsstrecke zu einer stationären Steuer- und Regeleinheit, sowie einem Stellglied zur Einprägung einer Spannung und einem Freilaufkreis. Der Übertrager arbeitet dabei insbesondere induktiv.

Mit der EP 1 247 324 B1 wird eine unidirektionale induktive Energieübertragung vorgeschlagen, wobei ein "rotierender Übertrager" aus zwei Schalen-Kernen mit Ringwicklungen und axialer Flussführung als induktives Betriebsmittel vorhanden ist. Dabei können sich die Schalenkerne gegeneinander um die gemeinsame Achse bewegen.

Induktiv arbeitende Betriebsmittel werden ausführlich in der Dissertation: Albert Esser: "Berührungslose, kombinierte Energie- und Informationsübertragung für bewegliche Systeme" ISBN 3-86073-046-0; ISEA, RWTH Aachen 1992 beschrieben. Die dortigen Ausführungen haben eine berührungslose bidirektionale Energie- und Datenübertragung in Robotergelenken zum Ziel.

Aus der DE 41 33 001 A1 ist weiterhin eine "photoelektrische Übertragung" für die Übertragung sowohl von Energie als auch von Daten bekannt. Während die Energieübertragung eine mangelhafte Leistungsdichte besitzt, können Daten sehr störunempfindlich und potentialfrei übertragen werden. Derartige Systeme sind kommerziell erhältlich. Eine solche unidirektionale Energieübertragung zur Erregung einer supraleitenden Wicklung erfordert zur Entregung einen passiven Widerstand auf dem gekühlten Rotor, der die Erregungsenergie in Wärme umsetzt, die dann abgeführt werden muss. Sowohl der Wärmeeintrag, als auch die passiv exponentiell abklingende Erregung sind dabei unerwünscht.

Aus der US 6,362,588 B1 ist eine Erregereinrichtung bekannt, mit der der Magnetisierungsstrom einer supraleitenden Spule in einem kryogenen Rotor einer elektrischen Maschine geregelt wird. Dabei wird die nötige Energie induktiv vom Stator auf den Rotor übertragen.

Aus der DE 10237779 A1 ist eine Motorwicklungserregerschaltung mit einem Transformator und einer bidirektional betreibbaren Wandlerschaltung bekannt, welche mindestens zwei Wandlerstufen aufweist, die zeitlich versetzt betrieben werden, um eine kontinuierliche Leistungsaufnahme aus einer Energiequelle und eine gute elektromagnetische Verträglichkeit zu erreichen.

Von letzterem Stand der Technik ausgehend ist es Aufgabe der Erfindung, eine verbesserte Erregereinrichtung für eine in elektrischen Maschinen verwendbare Wicklung zu schaffen.

Die Aufgabe ist erfindungsgemäß durch die Merkmale des Patentanspruches 1 gelöst. Vorteilhafte Weiterbildungen sind Gegenstand der abhängigen Ansprüche.

Die Erfindung ist insbesondere auf eine Synchronmaschine mit einer supraleitenden Polradwicklung aus hochtemperatursupraleitendem Material gerichtet.

Mit der Erfindung wird speziell eine bidirektionale Energieübertragung über einen rotierenden induktiven Übertrager realisiert. Der induktive Übertrager besteht dabei vorteilhafterweise aus Schalenkernen und einem geeigneten Spannungsstellglied auf dem Rotor.

Mit der erfindungsgemäßen Erregereinrichtung wird eine supraleitende Induktivität direkt gespeist. Vorteilhafterweise lässt sich dabei an der supraleitenden Induktivität eine bipolare Spannung einprägen. Besitzt diese Spannung einen konstanten Betrag, so lässt sich die supraleitende Induktivität entsprechend linear erregen bzw. entregen.

Erfindungsgemäß ist für den Fall der Rückspeisung bei gleichzeitigem Netzspannungsausfall die Speisung der Steuerelektronik und ggf. anderer elektrischer Geräte vorübergehend aus der supraleitenden Induktivität ermöglicht. Eine separate unterbrechungsfreie Stromversorgung (USV) ist also vorteilhafterweise nicht notwendig. Darüber hinaus kann durch die Rückspeisung der Erregungsenergie ein unerwünschter Wärmeeintrag im gekühlten System beim Abmagnetisieren vermieden werden.

Bei der Erfindung braucht der rotierende Übertrager aufgrund einer schlechteren Ausnutzung nicht zwingend in Mittelpunktsschaltung betrieben werden. Für eine gute Leistungsdichte des induktiven Übertragers empfiehlt sich die Übertragung mit Mittelfrequenz, u. U. möglichst resonant, so dass die Komponenten klein sind.

Insgesamt ist also durch Erfindung gleichermaßen eine aktive Erregung und auch eine Entregung von insbesondere supraleitenden Polradspulen für eine elektrische Synchronmaschine möglich. Dabei erfolgt kein erhöhter Wärmeeintrag in das gekühlte System. Zusätzlich ergibt sich bei Netzspannungsaus-, fall eine USV-Funktion.

Weitere Einzelheiten und Vorteile der Erfindung ergeben sich aus der nachfolgenden Figurenbeschreibung eines Ausführungsbeispiels anhand der Zeichnung in Verbindung mit den Patentansprüchen. Die einzige Figur zeigt die schaltungsmäßige Ausbildung einer Einrichtung zur bidirektionellen Er- bzw. Entregung speziell einer supraleitenden Spule.

In der Figur besteht die Schaltung im Einzelnen aus einem Netzanschluss 1 als Spannungsquelle, aus einem nachfolgenden Umrichter 2 aus Gleichrichter mit anschließendem Wechselrichter 3 und zugehöriger Elektronik. Weiterhin ist ein induktiver Übertrager 5 vorhanden, dessen Ersatzschaltbild als kontaktloser Transformator in der Vergrößerung A dargestellt ist.

Dem Übertrager 5 schließt sich sekundärseitig eine Erregerschaltung 6 mit Spannungsvorgabe bzw.-einstellung für eine Induktivität an. Die Induktivität ist aus einer Spule aus supraleitendem Material, insbesondere aus hochtemperatursupraleitendem (HTS) Material, das eine vergleichsweise hohe Sprungtemperatur hat, gebildet.

In der Figur ist die supraleitende Spule mit Induktivitätswert $L_{SC}$ insgesamt mit 10 bezeichnet. Der supraleitenden Spule 10 ist ein Freilaufkreis 11 parallelgeschaltet.

Der Freilaufkreis 11 ist in unmittelbarer Nähe der supraleitenden Wicklung 10 angeordnet und ist bestimmungsgemäß niederohmig. Für den dynamischen Betrieb des Erregerfelds ein externes Stellglied 7 zur Bereitstellung einer bipolaren Spannung an der supraleitenden Wicklung 10 bei unipolarem Erregerstrom unerlässlich. Tritt während des Abmagnetisierens ein Stromausfall auf der Primärseite einer Erregereinrichtung auf, so muss die HTS-Wicklung 10 an den Freilaufkreis 11 geschaltet werden, da die Erregerleistung dann nicht an die Primärseite abgeführt werden muss. Ansonsten müsste die elektrischen Leistung auf dem Stator der Maschine in Wärme umgesetzt werden.

Der konkrete Aufbau der so beschriebenen Erregereinrichtung ergibt sich gemäß Figur in der Kombination der jeweiligen, standardmäßig bezeichneten Bauelemente, auf die im Einzelnen verwiesen wird. Damit sind eine Einheit zur bidirektionalen Leistungs- und Energieübertragung sowie ein Stellglied zur bipolaren Spannungseinprägung an der supraleitenden Induktivität der Spule 10 definiert.

Ein dreiphasiger stationärer Netzanschluss stellt mittels eines Standardgleichrichters eine Gleichspannung an der Zwischenkreiskapazität C1 zur Verfügung. Die Vorgabe eines bidirektionalen Leistungsflusses erfordert entweder einen selbstgeführten spannungseinprägenden Gleichrichter oder eine einfache netzgeführte Diodenbrücke mit Brems-Chopper zur Umsetzung der von der supraleitenden Induktivität rückspeisbaren Energie. Zunächst sei der Leistungsfluss vom Netzanschluss zur supraleitenden Induktivität (von links nach rechts) dargestellt.

Der Wechselrichter 3 und der Übertragungsstrecke sind spannungseinprägende Umrichter. Der Wechselrichter (z. B. mit den IGBTs S1x,D1x) setzt die Gleichspannung in eine Rechteckspannung mit Mittelfrequenz $f_S$ um. Der Gleichrichter (S2x hier MOSFETS mit intrinsischen Freilaufdioden) arbeitet auf einen Gleichspannungskondensator C2. Der Einsatz von MOSFETs auf der Sekundärseite ist vorzugsweise bei einer vergleichsweise niedrigen Spannung U2 geeignet.

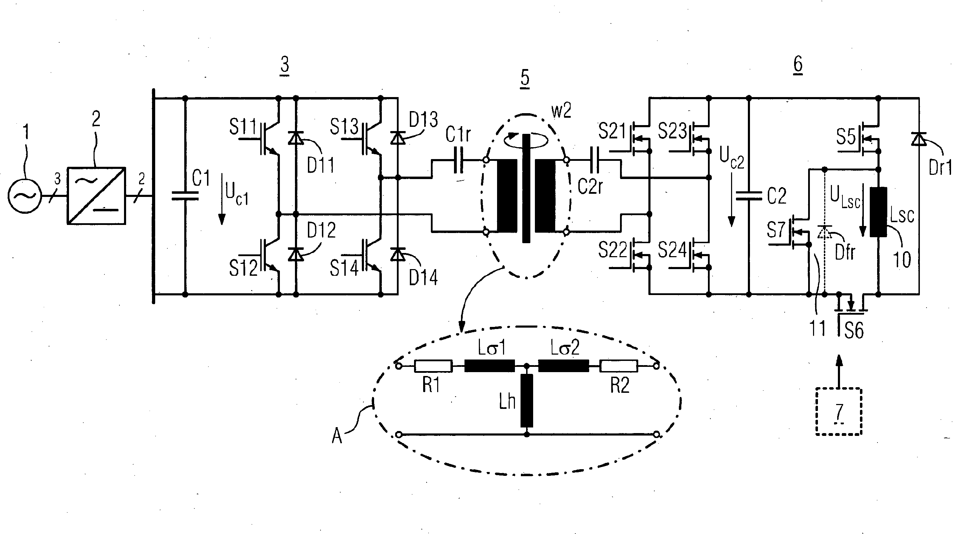

In der in Figur 1 dargestellten Ausführung liegen folgende Resonanzkapazitäten C1r und C2r vor:

$$C1r = \frac{1}{4\pi^2 \cdot f_S^2 \cdot L_{\sigma 1}};\qquad (1)$$

$$C2r = \frac{1}{4\pi^2 \cdot f_S^2 \cdot L_{\sigma 2}} \cdot \left(\frac{w_2}{w_1}\right)^2 \qquad (2)$$

Es ergibt sich ein sinusförmiger Strom im Wechselstromzwischenkreis, wobei die induktiven Spannungsfälle über den Streuinduktivitäten $L_{\sigma \cdot x}$ kompensiert werden. Die Resonanzkapazität kann auch nur auf einer Seite angebracht werden, so dass für Gleichung (1) gilt:

$$C1r = \frac{1}{8_4{}^2 fs^2 L\sigma 1} \qquad (1a)$$

Die Spannung $U_{C2} \approx U_{C1} \cdot \frac{w_2}{w_1}$ über C2 ergibt sich mit den ohm' schen Spannungsfällen über den Trafowicklungen und an den Leistungshalbleitern wenig kleiner als die mit dem Übersetzungsverhältnis auf die Sekundärseite umgerechnete Spannung $C_{C1}$. Die auftretenden Verluste dienen aber auch der Bedämpfung des Systems bei Lastsprüngen an der Kapazität C2.

Die Auswahl der hinsichtlich der richtigen Dämpfung geeigneten Kapazität C2 wird in der eingangs zitierten Dissertation ausgeführt. Der jeweilige Gleichrichter ist immer passiv, die entsprechenden Leistungsschalter (IGBT oder Dioden) werden dementsprechend von der Ablaufsteuerung gesperrt.

Im Gleichrichter leiten die Dioden den Strom und werden natürlich kommutiert. Der Wechselrichter schaltet die IGBTs stromlos ein und hart ab. Allerdings muss dann nur der kleine dreieckförmige Magnetisierungsstrom auf die Dioden kommutiert werden

Bei umgekehrtem Leistungsfluss wechseln Gleich- und Wechselrichter die Rollen. Die übergeordnete stationäre Ablaufsteuerung steuert Erregung oder Entregung oder den Freilauf des Erregerstroms sowie das rotierende Spannungsstellglied zur Steuerung von $U_{Lsc}$.

Als Spannungsstellglied arbeiten S5-S7 mit den Dioden Dr1 und der Bodydiode Dfr von S7. Ist S5 und S6 eingeschaltet, S7 ausgeschaltet, so wird die HTS-Wicklung mit der Spannung $-U_{C2}$ erregt. Wird S5 abgeschaltet, so übernimmt die Diode Dfr den Freilaufstrom. Ihre Flussspannung wird verkleinert, in dem der MOSFET S7 im dritten Quadranten seiner Steuerkennlinie eingeschaltet wird und so den Freilaufstrom wesentlich übernimmt. Wird S6 ausgeschaltet, so liegt an $L_{SC}$ die Spannung $-U_{C2}$ an. Die HTS Wicklung 10 wird also entregt.

Wesentlich bei der Erregung und der Entregung der HTS-Induktivität ist, dass die berührungslose Energieübertragung gleichermaßen den entsprechenden Leistungsfluss gestattet, was von der Ablaufsteuerung mit der Leistungselektronik sichergestellt wird. Hat der Erregerstrom einen bestimmten Sollwert erreicht, so wird in den Freilaufkreis geschaltet bis eine gewisse Grenze unterschritten ist und wieder im Erregungszustand nachgeladen werden muss.

Die beschriebene Anordnung eignet sich besonders zur Speisung einer großen rotierenden HTS-Induktivität, deren Magnetisierungsstrom stationär mit niedriger Regel-/Steuerdynamik gesteuert wird. Insbesondere besitzt die Ablaufsteuerung Kenntnis über die Richtung des Leistungsflusses, so dass keine Synchronisation des Wechsel- und Gleichrichters wie beim eingangs genannten Stand der Technik erforderlich ist. Der jeweilige Gleichrichter ist immer passiv, die entsprechenden Leistungsschalter (IGBT oder Dioden) werden dementsprechend von der Ablaufsteuerung gesperrt.

Fällt die Netzspannung während der Entregung aus, muss in den Freilaufkreis übergegangen werden, da die Leistung ohne Brems-Choppers nicht abgegeben werden kann und so die Zwischenkreisspannung am netzseitigen Umrichter gefährlich hohe Werte annehmen kann. Dementsprechend darf die Ablaufsteuerung bei Netzausfall nicht ausfallen. Ein ggf. erforderliches Nachladen der Spannung $U_{C1}$ aus der HTS-Wicklung garantiert eine ausreichende Versorgungsspannung. Je nach Energieinhalt der HTS-Wicklung können auch andere Komponenten aus $U_{C1}$ versorgt werden um sie bei Netzausfall kontrolliert abzuschalten (USV).

Für die berührungslose Datenübertragung der Erregerstrommesswerte und der Steuerinformation der sekundären Umrichter können optische, induktive oder kapazitive System verwendet werden. Besonderer Vorteil der beschriebenen Schaltung ist, dass die Erregung und Entregung in den beschriebenen Stromkreisen gesteuert erfolgen kann. Somit braucht zur Entregung keine separate Energiequelle verwendet werden.

## Patentansprüche

1. Erregereinrichtung für elektrische Maschinen aus Stator und Rotor mit Polradwicklung, wobei über einen induktiven Übertrager (5) eine induktive Energieübertragung auf die Wicklung (10) erfolgt und eine zugehörige Leistungselektronik (2) vorhanden ist, die für eine bidirektionale Übertragung der Leistung bzw. Energie ausgelegt ist, wobei die Polradwicklung auf dem Rotor eine supraleitende Induktivität (10) aus einer Wicklung aus hochtemperatursupraleitendem (HTS-)Material ist, wobei im Fall einer Rückspeisung und gleichzeitigem Netzspannungsausfall die Leistungselektronik aus der supraleitenden Induktivität (10) gespeist wird.

2. Erregereinrichtung nach Anspruch 1, **dadurch gekennzeichnet, dass** an der supraleitenden Induktivität (10) eine bipolare Spannung ($U_{LSC}$) einprägbar ist.

3. Erregereinrichtung nach Anspruch 1, **dadurch gekennzeichnet, dass** weitere elektrische Geräte aus der supraleitenden Induktivität (10) speisbar sind.

4. Erregerschaltung nach einem der vorhergehenden Ansprüche, **dadurch gekennzeichnet, dass** für eine gute Leistungsdichte des induktiven Übertragers (5) die Übertragung mit Mittelfrequenz, vorzugsweise in resonanter Abstimmung, erfolgt.

## Claims

1. Excitation device for electric machines comprising a stator and a rotor with a field winding, inductive energy transmission to the winding (10) taking place via an inductive transformer (5), and associated power electronics (2) being provided which are designed for bidirectional transmission of the power or energy, the field winding on the rotor being a superconducting inductance (10) comprising a winding made of high-temperature superconducting (HTS) material the power electronics being fed from the superconducting inductance (10) in the case of feedback and simultaneous system voltage failure.

2. Excitation device according to Claim 1, **characterized in that** a bipolar voltage ($U_{Lsc}$) can be impressed on the superconducting inductance (10).

3.  Excitation device according to Claim 1, **characterized in that** further electrical devices can be fed from the superconducting inductance (10).

4.  Excitation device according to one of the preceding claims, **characterized in that** the transmission takes place at mid-frequency, preferably with resonant tuning, for a good power density of the inductive transformer (5).

**Revendications**

1.  Dispositif d'excitation de machines électriques composées d'un stator, d'un rotor et d'un enroulement de roue polaire, dans lequel une transmission d'énergie par induction à l'enroulement (10) s'effectue par un transformateur (5) inductif et il y a une électronique (2) de puissance associée qui est conçue pour une transmission bidirectionnelle de la puissance ou de l'énergie, l'enroulement de roue polaire sur le rotor étant une inductance ( 10 ) supraconductrice en un enroulement en un matériau supraconducteur à haute température ( HTS dans lequel, dans le cas d'une alimentation en retour et d'une perte de tension du secteur simultanée, l'électronique de puissance est alimentée à partir de l'inductance ( 10 ) supraconductrice.

2.  Dispositif d'excitation suivant la revendication 1, **caractérisé en ce qu'**une tension ( $U_{LSC}$ ) bipolaire peut être appliquée à l'inductance ( 10 ) supraconductrice.

3.  Dispositif d'excitation suivant la revendication 1, **caractérisé en ce que** d'autres appareils électriques peuvent être alimentés à partir de l'inductance supraconductrice.

4.  Dispositif d'excitation suivant l'une des revendications précédentes, **caractérisé en ce que**, pour avoir une bonne densité de puissance du transformateur (5) inductif, la transmission s'effectue à une fréquence moyenne, de préférence en accord de résonance.

EP 1 929 616 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1247324 B1
- DE 4133001 A1
- US 6362588 B1
- DE 10237779 A1

**In der Beschreibung aufgeführte Nicht-Patentliteratur**

- *Berührungslose, kombinierte Energie- und Informationsübertragung für bewegliche Systeme,* 1992, IS-BN 3-86073-046-0